# FASCICULE DE BREVET EUROPEEN

(11) **EP 4 393 745 B1**
(45) Date de publication et mention de la délivrance du brevet: **10.09.2025**
(21) Numéro de dépôt: 23217454.0
(22) Date de dépôt: 18.12.2023
(51) Int. Cl.: B60K 35/00, B60K 35/22, B60K 35/50, B60K 35/60, B60K 37/00

(54) **SYSTÈME D AFFICHAGE DE VÉHICULES AUTOMOBILES**
ANZEIGESYSTEM FÜR KRAFTFAHRZEUGE
MOTOR VEHICLE DISPLAY SYSTEM

(30) Priorité: 20.12.2022 FR 2213945
(43) Date de publication de la demande: 03.07.2024
(73) Titulaire: Renault s.a.s, 92100 Boulogne Billancourt (FR)
(72) Inventeur: CICCONE, Vincent, 78280 GUYANCOURT (FR)

(56) Documents cités:
- DE-A1- 102017 202 490
- FR-A1- 3 093 962
- FR-A1- 3 101 579
- GB-A- 1 086 133

## Description

La présente invention se rapporte à un système d'affichage destiné à être monté dans un tableau de bord de véhicule automobile.

Dans un véhicule automobile il existe plusieurs systèmes d'affichage différents. Le plus connu étant le compteur de vitesse généralement installé derrière le volant de direction. L'utilisation d'un afficheur numérique est devenue très courante, notamment à l'arrière du volant de direction, afin d'afficher les informations de vitesse, de distance parcourue, ou encore de consommation du véhicule automobile.

Il est assez fréquent, par simplification de nommer cet afficheur numérique « compteur numérique » ou plus simplement « compteur » même s'il ne se limite pas à l'affichage de la seule information de comptage de vitesse ou de distance.

Traditionnellement, le système d'affichage comprend un logiciel, un écran digital ou des afficheurs analogiques, tels que des cadrans à aiguille, et un verre épais de protection.

Un des inconvénients de cette solution est l'encombrement du tableau de bord. En effet, le verre de protection est très épais et l'installation prend un grand espace dans le tableau de bord.

Pour libérer cet espace, plusieurs constructeurs ont conçu des systèmes *Head-Up Display,* en anglais « Afficheurs Tête-Haute » qui permettent de créer une image virtuelle du compteur dans l'axe du pare-brise du véhicule automobile. Cette solution permet de libérer l'espace utilisé par l'afficheur numérique sur le tableau de bord.

Cependant, l'écran lumineux utilisé doit être puissant pour que l'image virtuelle soit visible et l'infrastructure technique mise en place est relativement complexe, ce qui augmente significativement les coûts de production. Et, une image virtuelle au niveau du pare-brise du véhicule automobile peut gêner la vision du conducteur lorsqu'il conduit, puisqu'il peut alors se focaliser sur l'écran et non sur la route.

D'autres solutions proposent un interface utilisateur permettant un affichage flexible de l'information grâce à un dispositif d'affichage générant une image virtuelle de l'interface utilisateur comme le document DE102019206196 A1. Le dispositif comprend également un système de capteur pour détecter et/ou suivre des objets d'exploitation et un dispositif de signalisation qui est configuré pour générer des signaux perceptibles en fonction du fonctionnement de l'interface utilisateur virtuelle pour générer des signaux. Cependant cette interface est encombrante.

Les documents DE 10 2017 202490 A1, FR 3 093 962 A1, FR 3 101 579 A1 et GB 1 086 133 A présentent différents systèmes d'affichage connus de tableau de bord d'un véhicule. Ainsi, les solutions proposées dans l'art antérieur présentent des inconvénients en termes de coût de production, d'encombrement et de lisibilité.

Aussi, il existe un besoin d'un système d'affichage libérant l'encombrement technique au profit d'une perception nouvelle et attractive de l'affichage de l'information, d'un espace de rangement ainsi qu'au service du design de la planche de bord, montrant le matériau d'habillage (textile ou autre) et simulant la lumière du jour entrante tout en diminuant les coûts de production par rapport à des solutions plus avancées.

On propose un système d'affichage destiné à être monté dans un tableau de bord d'un véhicule automobile comprenant un volant en saillie du tableau de bord, ledit tableau de bord comprenant une cavité délimité par une paroi supérieur, une paroi inférieur opposé à la paroi supérieure, un fond et une ouverture débouchant en regard du volant, ledit système comprenant :
- un écran source installé horizontalement en partie supérieure non visible du conducteur dans la cavité, l'écran source présentant un bord antérieur s'étendant au voisinage du volant et un bord postérieure éloigné du volant,
- une plaque translucide installée à l'intérieur de la cavité adaptée pour former une image déportée de l'écran source, la plaque translucide présentant un bord supérieur et un bord inférieur, et définit un espace libre avec le fond du tableau de bord, ladite image déportée étant formée dans l'espace libre défini par la plaque et du côté opposé à l'écran source par rapport à la plaque translucide.

L'écran source est installé dans la paroi supérieure de la cavité horizontalement et le bord supérieur de la plaque translucide est situé vers le fond de la cavité et le bord inférieur de la plaque translucide est situé vers l'ouverture.

Un avantage de l'objet de l'invention est de proposer un système d'affichage simple et performant dans un véhicule automobile permettant de libérer l'encombrement technique par rapport à un système d'affichage traditionnel.

De plus, lorsque l'utilisateur regarde en direction de l'espace où l'image déportée se forme, il aura l'impression que l'écran source est affiché en cet endroit alors que l'espace est vide et qu'il ne s'agit que de l'image déportée, par un procédé holographique. L'utilisateur aura donc la perception d'un espace perçu ouvert et lumineux et d'un espace de rangement plus grand et d'un design épuré.

Avantageusement et de manière non limitative, la plaque translucide peut former un angle prédéfini avec l'écran source, et, l'angle est réglable.

L'angle peut être réglé en modifiant l'inclinaison de la plaque translucide. Régler l'angle permet d'afficher l'image déportée à l'endroit voulu par l'utilisateur pour qu'il puisse la voir lorsqu'il est assis dans le véhicule, cela permet également d'agrandir ou de diminuer la profondeur de l'image formée.

Dans un mode de réalisation, le système d'affichage peut comprendre un logement aménagé dans la paroi supérieure du tableau de bord et débouchant dans l'espace libre.

Le logement permettra d'aménager des équipements pour modifier l'environnement de l'espace libre autour de l'image déportée.

Selon l'invention, le logement peut déboucher à l'extérieur du tableau de bord de manière à éclairer l'espace libre de lumière naturelle. La lumière naturelle permettra d'éclairer l'espace libre de manière différente au fur et à mesure de la journée puisque cette lumière se modifie suivant les conditions extérieures.

Avantageusement et ne faisant pas partie de l'invention, le logement peut accueillir une source lumineuse en regard de la paroi inférieure de manière à éclairer l'espace libre. La source lumineuse pourra être réglée de manière à modifier sa luminosité et sa couleur, ce qui permettra de modifier l'environnement de l'espace libre pour définir des ambiances autour de l'image déportée suivant l'envie de l'utilisateur du véhicule.

Dans un autre mode de réalisation, au moins une autre source lumineuse peut être installée en contact avec la plaque translucide.

Cette source lumineuse peut être une diode électroluminescente ou un guide de lumière permettant de guider la lumière pour créer des effets de lumière au niveau de l'image déportée.

Avantageusement et de manière non limitative, l'au moins une autre source lumineuse peut être installée au voisinage du volant, dans l'espace libre en s'étendant vers le fond et/ou en intersection avec la plaque translucide.

L'invention concerne aussi un tableau de bord d'un véhicule automobile comprenant :
- un volant en saillie du tableau de bord,
- une cavité délimité par une paroi supérieur,
- une paroi inférieur opposé à la paroi supérieure,
- un fond, et,
- une ouverture débouchant en regard du volant.

Le tableau de bord comprend le système d'affichage tel que décrit précédemment.

L'invention concerne également un véhicule automobile comprenant le tableau de bord tel que décrit précédemment.

D'autres particularités et avantages de l'invention ressortiront à la lecture de la description faite ci-après de plusieurs modes de réalisation particuliers de l'invention, donnés à titre indicatif mais non limitatif, en référence aux dessins annexés sur lesquels :
[Fig. 1] La figure 1 est une vue schématique du dessus de l'avant de l'habitacle d'un véhicule automobile.
[Fig. 2] La figure 2 est une vue d'une section axiale de l'objet de l'invention intégré à un véhicule automobile.
[Fig. 3] La figure 3 est une vue d'une section axiale du mode de réalisation de l'invention intégré à un véhicule automobile.
[Fig. 4] La figure 4 est une vue d'une section axiale d'un autre mode de réalisation ne faisant pas partie de l'invention intégré à un véhicule automobile.
[Fig. 5] La figure 5 est une vue d'une section axiale d'un autre mode de réalisation de l'invention intégré à un véhicule automobile.

Pour les besoins de la description, on se référera à un repère orthogonal direct XYZ classiquement utilisé en conception automobile, dans lequel l'axe X désigne la direction longitudinale avant-arrière du véhicule, orienté vers l'arrière, l'axe Y désigne la direction transversale et est orienté vers la droite du véhicule, l'axe Z désigne la direction verticale, et est orienté vers le haut. Le plan XY est donc horizontal lorsque le véhicule repose classiquement sur une surface horizontale.

L'invention concerne un système d'affichage 1 destiné à être monté dans un tableau de bord 2 d'un véhicule automobile.

Usuellement, un véhicule automobile comprend un habitacle présentant une partie avant destinée à recevoir le conducteur du véhicule et éventuellement un passager. Le tableau de bord 2 est installé à l'avant des sièges conducteur et passager.

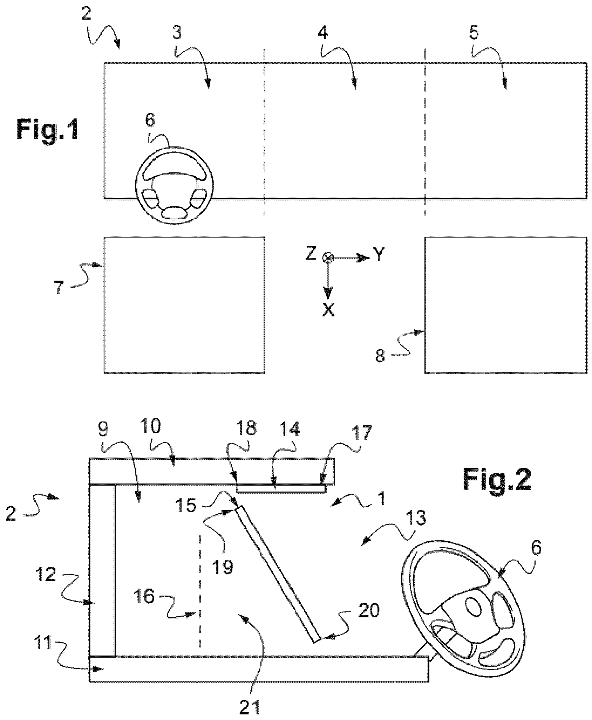

En référence à la [Fig. 1], le tableau de bord 2 s'étend selon un axe principal latéral (Y), entre le côté droit et le côté gauche du véhicule automobile.

Ce tableau de bord comprend trois parties distinctes 3-5 :
- une partie de conduite 3, de laquelle le volant de direction 6 s'étend en saillie et à l'avant d'un siège conducteur 7.
- une partie centrale 4 surplombant ou intégrant généralement la console centrale ; et,
- une partie passager 5 opposée à la partie de conduite 3 par rapport à la partie centrale 4, surplombant généralement ou intégrant une boite à gants, et étant à l'avant du siège passager 8.

Le système d'affichage 1 est monté dans le tableau de bord 2 au niveau de la partie de conduite 3 derrière le volant de direction 6.

Mais l'invention n'est pas limitée à un système d'affichage 1 monté dans la partie de conduite 3 puisqu'il peut être aussi installé au niveau de la partie centrale 4 ou de la partie passager 5, permettant ainsi une utilisation des écrans par tous les usagers du véhicule automobile. L'invention pourra à la lecture de la description être adaptée pour que le système soit monté en une autre partie du tableau de bord.

En outre on pourrait prévoir une pluralité de systèmes d'affichage selon l'invention installés en différents endroits du tableau de bord, par exemple pour le conducteur et pour le passager. Dans une variante de réalisation non représentée, on peut également prévoir que le système d'affichage soit coulissant par exemple entre une partie centrale de la planche de bord et une partie passager située à l'opposé du conducteur.

En effet, beaucoup de véhicules automobiles comprennent des systèmes d'affichage notamment au niveau de la partie centrale du tableau de bord comme un GPS par exemple ou encore une interface de contrôle de la musique à diffuser dans l'habitacle.

En référence à la [Fig. 2], le tableau de bord 2 comprend une cavité 9 délimitée par une paroi supérieure 10, une paroi inférieure 11 opposée à la paroi supérieure 10, un fond 12, et, une ouverture 13 débouchant en regard du volant 6.

Le système d'affichage 1, selon l'invention, est installé dans la cavité 9 du tableau de bord 2. Son emplacement est alors équivalent à l'emplacement habituel de l'afficheur numérique de l'art antérieur comprenant le compteur de vitesse.

Le système d'affichage 1 comprend un écran source 14, une plaque translucide 15 adaptée à former une image déportée 16 de l'écran source 14.

L'écran source 14 est installé dans la paroi supérieure 10 de la cavité, il présente un bord antérieur 17 s'étendant vers le volant 6, autrement dit au voisinage du volant 6, et un bord postérieur 18 éloigné, ou écarté, du volant 6. L'écran source 14 peut être un écran LCD, un écran LED, OLED, ou tout type d'écran connu de l'art antérieur présentant toutefois une luminosité suffisante pour que l'information à afficher puisse être reproduite sous forme d'image déportée. L'utilisateur ne regardant pas directement l'écran mais une image produite de celui-ci, alors l'écran n'a pas nécessairement besoin d'avoir une résolution particulièrement importante.

Dans un mode de réalisation particulièrement avantageux, une trappe supérieure peut être ménagée dans le tableau de bord 2 de sorte à pouvoir accéder à cet écran source 14 pour la maintenance et l'intervention, et s'il est amovible, de sorte à pouvoir le retirer ou l'installer. Il peut également être inséré au travers d'une fente donnant accès à la cavité.

Optionnellement, l'écran peut être amovible et peut donc être déplacé par l'utilisateur, en particulier par l'intermédiaire de la trappe décrit précédemment.

La plaque translucide 15 présente un bord supérieur 19 et un bord inférieur 20. Elle définit, avec le fond 12 du tableau de bord 2, un espace libre 21 dans lequel l'image déportée 16 est formée. L'image déportée 16 est ainsi formée par réfraction des rayons lumineux émis par l'écran source 14 du côté opposé à l'écran source 14 par rapport à la plaque translucide 15.

La plaque translucide 15 peut par exemple être en verre ou en matériau polymère tel que du plexiglas. Une telle plaque présente des propriétés optiques particulières, et notamment semi-réfléchissantes, qui sont dues aux matériaux utilisés et à son procédé de fabrication. Un exemple de plaque, non exclusif, est celle décrite dans le document EP2919045 A1 de ASUKANET CO LTD. Cependant, l'invention n'est pas limitée à cette plaque précise, toutes plaques translucides conventionnelles permettant de créer une image déportée d'un écran source peuvent être utilisées.

La plaque translucide 15 est installée dans la cavité 9 de manière oblique par rapport à l'écran source 14 de sorte que le bord supérieur 19 de la plaque translucide est situé vers le fond 12 de la cavité 9 et le bord inférieur 20 de la plaque translucide 15 est situé vers l'ouverture 13.

En particulier, la plaque translucide 15 forme un angle prédéfini avec l'écran source 14. L'angle étant réglable suivant l'emplacement et l'inclinaison de l'image déportée 16 voulu pour qu'un utilisateur du véhicule puisse le voir lorsqu'il est assis dans le véhicule. L'angle est réglable entre 35° et 55° par rapport à l'horizontal du tableau de bord, c'est-à-dire par rapport à un plan XY. Préférentiellement, il est sensiblement égal à 45°. L'angle peut être réglé en modifiant l'inclinaison de la plaque translucide par rapport à la direction longitudinale X.

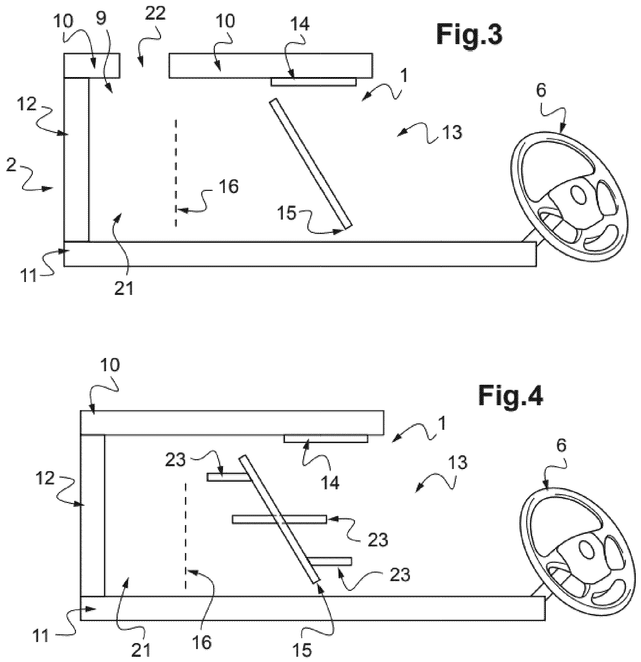

Selon l'invention, en référence à la [Fig. 3], la paroi supérieure 10 du tableau de bord 2 comprend un logement 22 ménagé dans la paroi supérieure 10 du tableau de bord 2 et débouchant dans l'espace libre 21.

Le logement 22 débouche à l'extérieure du tableau de bord 2, en référence à la [Fig. 3], de manière à pouvoir éclairer l'espace libre avec la lumière naturelle.

Alternativement et ne faisant pas partie de l'invention, le logement 22 peut accueillir une source lumineuse en regard de la paroi inférieure de manière à éclairer l'espace libre. Cette source lumineuse peut être une diode électroluminescente (abrégé LED en anglais) dont on peut modifier la luminosité ainsi que la couleur.

En référence à la [Fig. 4], au moins une autre source lumineuse 23 peut être installée en contact avec la plaque translucide. Cette source lumineuse 23 peut être une diode électroluminescente ou un guide de lumière permettant de guider la lumière pour créer des effets de lumière au niveau de l'image déportée 16.

L'au moins une source lumineuse 23 peut être installée au voisinage du volant, dans l'espace libre en s'étendant vers le fond 12 et/ou en intersection avec la plaque translucide suivant l'effet voulu.

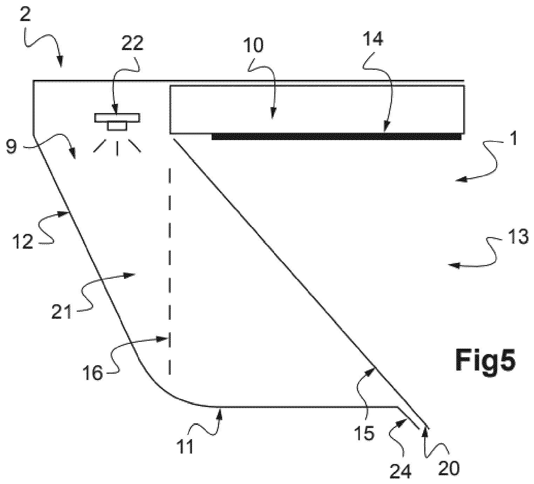

Enfin, dans un autre mode de réalisation, en référence à la [Fig. 5], le bord inférieur 20 de la plaque translucide 15 est en contact et coopère avec la paroi inférieure 11 de la cavité pour isoler l'espace libre 21 par rapport à l'ouverture 13. En référence à la [Fig. 5], le bord inférieur 11 de la cavité présente un bord 24 recouvert par le bord inférieure 20 de la paroi translucide 15. La largeur de la surface de recouvrement est typiquement de quelques millimètres, par exemple entre 2 et 10 millimètres.

Dans un autre exemple non illustré de l'invention, le bord inférieur 20 de la plaque 15 peut coopérer en contact avec la paroi inférieur 11 de la cavité, pour isoler de la même façon l'espace libre 21 de l'ouverture 13.

## Revendications

1. Système d'affichage (1) destiné à être monté dans un tableau de bord (2) d'un véhicule automobile comprenant un volant (6) en saillie du tableau de bord (2), ledit tableau de bord (2) comprenant une cavité délimité par une paroi supérieur (10), une paroi inférieur (11) opposé à la paroi supérieure (10), un fond (12) et une ouverture (13) débouchant en regard du volant (6), ledit système (1) comprenant :
- un écran source (14) installé dans la cavité, l'écran source (14) présentant un bord antérieur (17) s'étendant au voisinage du volant (6) et un bord postérieure (18) éloigné du volant (6),
- une plaque translucide (15) installée à l'intérieure de la cavité adaptée pour former une image déportée (16) de l'écran source (14), la plaque translucide (15) présentant un bord supérieur (19) et un bord inférieur (20), et définit un espace libre (21) avec le fond (12) du tableau de bord (2), ladite image déportée (16) étant formée dans l'espace libre (21) défini par la plaque (15) et du côté opposé à l'écran source (14) par rapport à la plaque translucide (15),
**caractérisé en ce que** l'écran source (14) est installé dans la paroi supérieure (10) de la cavité et **en ce que** le bord supérieure (19) de la plaque translucide (15) est situé vers le fond (12) de la cavité et le bord inférieure (20) de la plaque translucide (15) est situé vers l'ouverture (13)
le système d'affichage comprenant, en outre, un logement (22) ménagé dans la paroi supérieure (10) du tableau de bord (2) et débouchant dans l'espace libre (21), ledit logement (22) débouchant à l'extérieure du tableau de bord (2) de manière à éclairer l'espace libre (21) de lumière naturelle.

2. Système d'affichage (1) selon la revendication 1, **caractérisé en ce que** la plaque translucide (15) forme un angle prédéfini avec l'écran source (14), et, **en ce que** l'angle est réglable.

3. Système d'affichage (1) selon la revendication 1 ou 2, **caractérisé en ce que** le bord inférieur (20) de la plaque translucide (15) est en contact et coopère avec la paroi inférieure (11) de la cavité pour isoler l'espace libre (21).

4. Système d'affichage (1) selon l'une quelconque des revendications 1 à 4, **caractérisé en ce qu'**au moins une autre source lumineuse (23) est installée en contact avec la plaque translucide (15).

5. Système d'affichage (1) selon l'une quelconque des revendications 1 à 5, **caractérisé en ce que** l'au moins une autre source lumineuse (23) est installée au voisinage du volant (6), dans l'espace libre (21) en s'étendant vers le fond (12) et/ou en intersection avec la plaque translucide (15).

6. Tableau de bord (1) d'un véhicule automobile comprenant :
- un volant (6) en saillie du tableau de bord (2),
- une cavité délimité par une paroi supérieur (10), une paroi inférieur (11) opposé à la paroi supérieure (10), un fond (12), et, une ouverture (13) débouchant en regard du volant (6),
**caractérisé en ce qu'**il comprend le système d'affichage (1) selon les revendications 1 à 6.

7. Véhicule automobile comprenant un tableau de bord (2) selon la revendication 7.

## Patentansprüche

1. Anzeigesystem (1), das dazu bestimmt ist, in einem Armaturenbrett (2) eines Kraftfahrzeugs montiert zu sein, das ein von dem Armaturenbrett (2) vorstehendes Lenkrad (6) beinhaltet, wobei das Armaturenbrett (2) einen Hohlraum beinhaltet, der durch eine obere Wand (10), eine zu der oberen Wand (10) entgegengesetzte untere Wand (11), eine Rückseite (12) und eine gegenüber dem Lenkrad (6) mündende Öffnung (13) begrenzt wird, wobei das System (1) Folgendes beinhaltet:
- einen Quellenbildschirm (14), der in dem Hohlraum installiert ist, wobei der Quellenbildschirm (14) einen vorderen Rand (17), der sich in der Nähe des Lenkrads (6) erstreckt, und einen hinteren Rand (18), der von dem Lenkrad (6) entfernt ist, aufweist,
- eine lichtdurchlässige Platte (15), die im Inneren des Hohlraums installiert ist und dazu angepasst ist, ein verlagertes Bild (16) des Quellenbildschirms (14) zu bilden, wobei die lichtdurchlässige Platte (15) einen oberen Rand (19) und einen unteren Rand (20) aufweist und mit der Rückseite (12) des Armaturenbretts (2) einen Freiraum (21) definiert, wobei das verlagerte Bild (16) in dem durch die Platte (15) definierten Freiraum (21) und auf der in Bezug auf die lichtdurchlässige Platte (15) zu dem Quellenbildschirm (14) entgegengesetzten Seite gebildet wird,
**dadurch gekennzeichnet, dass** der Quellenbildschirm (14) in der oberen Wand (10) des Hohlraums installiert ist und dass sich der obere Rand (19) der lichtdurchlässigen Platte (15) zu der Rückseite (12) des Hohlraums hin befindet und sich der untere Rand (20) der lichtdurchlässigen Platte (15) zu der Öffnung (13) hin befindet,
wobei das Anzeigesystem ferner eine Aufnahme (22) beinhaltet, die in der oberen Wand (10) des Armaturenbretts (2) eingerichtet ist und in dem Freiraum (21) mündet, wobei die Aufnahme (22) außerhalb des Armaturenbretts (2) mündet, um den Freiraum (21) mit natürlichem Licht zu beleuchten.

2. Anzeigesystem (1) nach Anspruch 1, **dadurch gekennzeichnet, dass** die lichtdurchlässige Platte (15) mit dem Quellenbildschirm (14) einen vordefinierten Winkel bildet und dass der Winkel einstellbar ist.

3. Anzeigesystem (1) nach Anspruch 1 oder 2, **dadurch gekennzeichnet, dass** der untere Rand (20) der lichtdurchlässigen Platte (15) mit der unteren Wand (11) des Hohlraums in Kontakt ist und mit dieser zusammenwirkt, um den Freiraum (21) zu isolieren.

4. Anzeigesystem (1) nach einem der Ansprüche 1 bis 4, **dadurch gekennzeichnet, dass** mindestens eine andere Lichtquelle (23) in Kontakt mit der lichtdurchlässigen Platte (15) installiert ist.

5. Anzeigesystem (1) nach einem der Ansprüche 1 bis 5, **dadurch gekennzeichnet, dass** die mindestens eine andere Lichtquelle (23) in der Nähe des Lenkrads (6), in dem Freiraum (21) und sich zu der Rückseite (12) hin erstreckend und/oder sich mit der lichtdurchlässigen Platte (15) schneidend installiert ist.

6. Armaturenbrett (1) eines Kraftfahrzeugs, beinhaltend:
- ein Lenkrad (6), das von dem Armaturenbrett (2) vorsteht,
- einen Hohlraum, der durch eine obere Wand (10), eine zu der oberen Wand (10) entgegengesetzte untere Wand (11), eine Rückseite (12) und eine gegenüber dem Lenkrad (6) mündende Öffnung (13) begrenzt wird,
**dadurch gekennzeichnet, dass** es das Anzeigesystem (1) nach einem der Ansprüche 1 bis 6 beinhaltet.

7. Kraftfahrzeug, das ein Armaturenbrett (2) nach Anspruch 7 beinhaltet.

## Claims

1. Display system (1) intended to be mounted in a dashboard (2) of a motor vehicle comprising a steering wheel (6) projecting from the dashboard (2), said dashboard (2) comprising a cavity delimited by an upper wall (10), a lower wall (11) opposite the upper wall (10), an end wall (12) and an opening (13) which emerges facing the steering wheel (6), said system (1) comprising:
- a source screen (14) installed in the cavity, the source screen (14) having a front edge (17) extending adjacent to the steering wheel (6) and a back edge (18) remote from the steering wheel (6),
- a translucent plate (15) installed inside the cavity and designed to form an offset image (16) of the source screen (14), the translucent plate (15) having an upper edge (19) and a lower edge (20), and defining a free space (21) with the end wall (12) of the dashboard (2), said offset image (16) being formed in the free space (21) defined by the plate (15) and on the opposite side to the source screen (14) with respect to the translucent plate (15),
**characterized in that** the source screen (14) is installed in the upper wall (10) of the cavity and **in that** the upper edge (19) of the translucent plate (15) is situated towards the end wall (12) of the cavity and the lower edge (20) of the translucent plate (15) is situated towards the opening (13),
the display system further comprising a slot (22) formed in the upper wall (10) of the dashboard (2) and emerging in the free space (21), said slot (22) emerging towards the outside of the dashboard (2) such that the free space (21) is illuminated by natural light.

2. Display system (1) according to Claim 1, **characterized in that** the translucent plate (15) forms a predefined angle with the source screen (14), and **in that** the angle is adjustable.

3. Display system (1) according to Claim 1 or **2, characterized in that** the lower edge (20) of the translucent plate (15) is in contact and cooperates with the lower wall (11) of the cavity to isolate the free space (21).

4. Display system (1) according to any one of Claims 1 to 4, **characterized in that** at least one other light source (23) is installed in contact with the translucent plate (15).

5. Display system (1) according to any one of Claims 1 to 5, **characterized in that** the at least one other light source (23) is installed adjacent to the steering wheel (6) in the free space (21) while extending towards the end wall (12) and/or intersecting with the translucent plate (15).

6. Motor vehicle dashboard (1) comprising:
- a steering wheel (6) projecting from the dashboard (2),
- a cavity delimited by an upper wall (10), a lower wall (11) opposite the upper wall (10), an end wall (12) and an opening (13) which emerges facing the steering wheel (6),
**characterized in that** it comprises the display system (1) according to Claims 1 to **6.**

7. Motor vehicle comprising a dashboard (2) according to Claim 7.
